# EUROPÄISCHE PATENTANMELDUNG

(11) **EP 2 557 248 A1**
(43) Veröffentlichungstag der Anmeldung: **13.02.2013**
(21) Anmeldenummer: 12180035.3
(22) Anmeldetag: 10.08.2012
(51) Int. Cl.: E04C 2/288, E04C 2/52, F24J 2/04

(54) **Bauelement und Herstellungsverfahren dafür sowie Energiegewinnungsanordnung**

(30) Priorität: 11.08.2011 DE 202011104258 U
(71) Anmelder: CRH Albert GmbH, 31595 Steyerberg-Wellie (DE)
(72) Erfinder: Laue, Heinrich, 31619 Binnen (DE)
(74) Vertreter: Einsel, Martin

(57) **Zusammenfassung**

Die Erfindung betrifft ein Bauelement (1) in Zweischalentechnik, aufweisend eine innere Wand (2) als tragende Struktur, eine äußere Wand (3) als Vorsatzschale mit einer dekorativen und/oder schützenden Funktion, einem Wärmetauscher (4) zur Übertragung von Wärme von dem Bauelement (1) an ein Wärmeträgermedium oder von dem Wärmeträgermedium an das Bauelement (1), sowie eine Energiegewinnungsanordnung und ein Herstellungsverfahren zur Herstellung eines Bauelementes (1).

## Beschreibung

Die Erfindung betrifft ein Bauelement in Zweischalentechnik, aufweisend eine innere Wand als tragende Struktur, eine äußere Wand als Vorsatzschale mit einer dekorativen und/oder schützenden Funktion, einem Wärmetauscher zur Übertragung von Wärme von dem Bauelement an ein Wärmeträgermedium oder von dem Wärmeträgermedium an das Bauelement, sowie eine Energiegewinnungsanordnung und ein Herstellungsverfahren zur Herstellung eines Bauelementes.

Bauelemente sind Fertigteile für den Haus-, Wohnungs-, Hallen-, Gewerbe- und/oder Hochhausbau, allgemein Fertigteile für Bauobjekte. Fertig vorgefertigte Bauelemente dienen der schnelleren Fertigstellung von Bauobjekten. Hierzu können komplexe Strukturen in Werkhallen vorgefertigt werden und anschließend mit Hilfe von Transportern an die Baustelle geliefert werden, um dort von entsprechenden Kränen an den vorgesehenen Stellen positioniert zu werden. Hierbei können komplexe Statiken berücksichtigt werden, um komplexe Bauelemente mit Hilfe von vorgefertigten passenden Schalungen herzustellen.

Derartige Bauelemente bestehen beispielsweise aus einer Betonhinterwand und einer Klinkerfassade. Innerhalb der Betonhinterwand ist die Bewährung eingebracht, so dass die Betonhinterwand die statischen Belange erfüllt. Fertige Bauelemente werden unterschieden in tragende Elemente, wie Fensterstürze, Arkadenbögen und Fassadenelemente, Brüstungen, Pfeiler und nicht statischen Belastungen ausgesetzte Fertigteilelemente, wie Fenstersohlbänke, Verzierungsornamente, Gesimse, Attika- und Mauerabdeckungen.

Als Fassaden für Bauwerke oder Objekte können unterschiedliche Ausgestaltungen gewählt werden. Ein Mauerwerk ist ein aus natürlichen oder künstlichen Steinen gefügtes Bauteil oder Bauwerk, wobei die Steine in einer bestimmten Fügungsart zu einem Mauerwerksverband zusammengesetzt sind. Als Klinkermauerwerk wird ein Mauerwerk bezeichnet, das aus Klinkern und Mörteln besteht. In der heutigen Zeit werden aus Klinkern bestehende Mauerwerke nicht als tragende Struktur verwendet, sondern in der Regel als Verblendmauerwerk eingesetzt. Das Verblendmauerwerk ist in der Regel mit einem Abstand zum Hauptmauerwerk vorgesetzt (Fingerspalt, bedingt durch das Aufmauern vor Ort).

Weiter sind Sonnenkollektoren im Stand der Technik allgemein bekannt. Sonnenkollektoren dienen dazu, die einstrahlende Sonnenenergie aufzufangen und diese weiterzuleiten. Die aufgefangene Sonnenenergie kann zur Raumtemperierung, -erwärmung oder zur Brauchwassererwärmung direkt verwendet werden.

Weiter ist aus der EP 1 980 679 A2 ein Ziegelstein bzw. ein Klinkerstein für eine Außenwand eines Gebäudes bekannt, der auf der Oberseite eine Vertiefung aufweist, in die ein Wärmetauscherrohr eingebettet werden kann. Hierbei wird während der Erstellung eines Verblendmauerwerks ein Wärmetauscherrohr derart in die Klinker bzw. Verblendsteine eingearbeitet, so dass am Schluss ein großflächiger Wärmetauscher aus einer Klinkerwand mit einem darin angeordneten Rohr ausgebildet ist. In dieser Klinkerwand ist das Wärmetauscherrohr von außen nicht sichtbar integriert ist. Eine derartige Gebäudewand mit einem Wärmetauscher ist in Richtung Süden ausgerichtet, um so die einstrahlende Sonnenenergie aufzufangen und mit Hilfe des integrierten Wärmetauscherrohrs abzutransportieren.

Problematisch an den bisher im Stand der Technik bekannten Möglichkeiten, einen Wärmetauscher in die Fassade zu integrieren, ist die Schwierigkeit der Herstellung der Einzelsteine und die damit verbundenen hohen Herstellungskosten. Insbesondere stellt die Einbringung eines Wärmetauschers in die Fassade während des Aufmauerns ein Problem dar, da dies sehr zeitintensiv ist. Bevorzugt werden heutzutage Sonnenkollektoren auf die fertige Fassade aufgebracht, um so Energie an diesen Fassaden nutzen zu können. Neben den optischen Nachteilen, die auf der Fassade aufgebrachte Sonnenkollektoren mit sich bringen, sind auch die deutlich höheren Produktions-, Wartungs- und Herstellungskosten zu nennen, die gegen den Einsatz von Sonnenkollektoren der herkömmlichen Art sprechen.

Der vorliegenden Erfindung liegt die Aufgabe zugrunde, ein Bauelement zur Energiegewinnung anzugeben, das einfach und kostengünstig in der Herstellung ist und zudem ästhetischen und architektonischen Ansprüchen in Bezug auf die Fassadengestaltung genügt, wobei insbesondere die einfache Herstellung hervorgehoben ist und vor allem auch das Fertigen und Herstellen von komplexen bis hoch komplexen Formen, insbesondere Raumformen wie konkav, konvex und/oder mehrfach gebogene / gewölbte Bauteiloberflächen, möglich sein soll.

Weiter ist es Aufgabe der Erfindung, ein Herstellungsverfahren anzugeben, mittels dessen die Herstellung von derartigen Bauelementen möglich ist.

Eine weitere Aufgabe der Erfindung ist es eine Energiegewinnungsanordnung aufzuzeigen, mit der die Nutzung von Sonnenenergie durch die entsprechenden erfindungsgemäßen Bauelemente möglich ist.

Gelöst werden diese Aufgaben mit einem Bauelement nach Anspruch 1, einem Herstellungsverfahren nach Anspruch 10 und einer Energiegewinnungsanordnung nach Anspruch 8.

Dadurch, dass das Bauelement in Zweischalentechnik, aufweisend eine innere Wand als tragende Struktur, eine äußere Wand als Vorsatzschale mit einer dekorativen und/oder schützenden Funktion, mit einem Wärmetauscher zur Übertragung von Wärme von dem Bauelement an ein Wärmeträgermedium oder von dem Wärmeträgermedium an das Bauelement, wobei der Wärmetauscher in der Grenzschicht zwischen der inneren und der äußeren Wand, in der inneren Wand angeordnet ist, ausgebildet ist, kann der Wärmetauscher in der Grenzschicht Energie, die durch die äußere Wand in das Bauelement eindringt, aufnehmen und diese nutzen. Die äußere Wand kann durch eine einfache Gestaltung mit üblichen Wandgestaltungsmitteln optisch und architektonisch ansprechend ausgebildet werden, ohne dabei auf technisch und statisch bedingte Konstruktionen in der inneren Wand Rücksicht nehmen zu müssen. Derartige Bauelemente in Zweischalentechnik können so zur regenerativen Energienutzung genutzt werden, wobei gleichzeitig eine ästhetisch ansprechende Fassade ausgebildet wird, die zudem kostengünstig hergestellt und vorprozessiert werden können.

Ein weiterer besonderer Vorteil ist es, dass die innere Wand Beton aufweist bzw. aus Beton besteht und die äußere Wand ein Verblendmauerwerk ist, bevorzugt aus Klinkern, besonders bevorzugt aus Riemchenklinkern, wobei die Fugen bevorzugt mit Mörtel gefüllt sind. Es entstehen Ziegel-Fertigelemente für die Erstellung von Sichtmauerwerk, die erhebliche Vorteile mit sich bringen. Zum einen wird der Baufortgang erheblich beschleunigt, da die fertigen Bauelemente sofort belastbar sind und etwaige mögliche Verarbeitungsfehler auf der Baustelle vermieden werden. Derartige Fehler können durch schlechte Verarbeitung vor Ort oder witterungsbedingt entstehen. Die Bauelemente sind fix und fertig konfektioniert und können so einfach an einen vorgesehenen Platz innerhalb eines Bauwerkes angeordnet werden. Als weitere mögliche Werkstoffe für die innere Wand können auch neuartige Kunststoffe, faserverstärkte Werkstoffe oder Putze im Allgemeinen verwendet werden.

Die innere und äußere Wand sind vollflächig miteinander verbunden und bilden eine monolithische Struktur aus. Zwischen der äußeren und der inneren Wand wird bei der Verwendung von Beton und Riemchenklinkern bzw. Klinkern eine dauerhafte Verbindung hergestellt, die äußerst strapazierfähig ist.

Komplette Bauelemente für Fassaden oder Teilbereiche von Fassaden, insbesondere ausgerichtet in Richtung Süden (auf der Nordhalbkugel), können in Klinker bzw. Riemchen-Verblendung hergestellt werden, wobei besonders bevorzugt die Riemchenklinker vorzuziehen sind, da diese nur eine sehr geringe Wärmeisolationswirkung auf Grund ihrer geringen Dicke aufweisen und so sehr viel Energie in die äußere Wand eindringen kann, die dann in der Grenzschicht der inneren Wand an den Wärmetauscher übertragen wird. Zusätzliche Elemente wie eingehängte Brüstungselemente, umlaufende Simse, Zierornamente können werksseitig vorgesehen werden und in die statische als auch die energetische Planung einbezogen werden. Bauelemente mit einer äußeren Wand als Ziegel-Fertigteile bereichern die Optik und helfen, reizvolle Fassadengestaltung kostengünstig in die Realität umzusetzen.

Wenn die äußere Wand aus einem Putz und/oder einer Fassadenbekleidung besteht, kann eine alternative Wandgestaltung vorgenommen werden. Hierzu sind beispielsweise Fassadentafeln oder -platten als äußere Wand möglich, wobei diese bevorzugt vollflächig aufzukleben sind, so dass die durch Sonneneinstrahlung eingebrachte Energie auf das Bauelement direkt an die Grenzschicht der inneren Wand übertragen wird.

Wenn der Wärmetauscher als biegbares Rohr ausgebildet ist, bevorzugt bestehend aus einem Kunststoff oder einem Mehrschichtverbundmaterial, wird gewährleistet, dass der Wärmetauscher kostengünstig herstellbar ist und zudem sehr leicht anpassbar ist. Ein einfaches händisches Biegen des Rohrs reicht bereits um das Rohr entsprechend eines Verlegeplans oder -musters innerhalb der inneren Wand zu verlegen. Zudem bestehen aus Materialsicht keine Unverträglichkeiten mit im Stand der Technik bekannten Baustoffen. Alternativ können auch andere Materialien wie Kupfer oder dgl. verwendet werden, wobei deren Verträglichkeit mit anderen Materialien beachtet werden muss.

Dadurch, dass das Wärmeträgermedium eine Sole-Flüssigkeit ist, wobei diese frostsicher ist, kann zum einen eine Wärmepumpe für einen Kreislaufprozess vorgesehen werden, die die Flüssigkeit unter den Gefrierpunkt von Wasser abkühlt. Gleichzeitig können derartige Bauelemente auch in den nördlicheren Breiten aufgebaut werden, so dass Frost den Wärmetauscher nicht zerstört.

Insbesondere ist der Wärmetauscher mäanderförmig, schlangenförmig und/oder schneckenförmig angeordnet, wodurch entsprechend energetischen Betrachtungen ein Maximum aus Kollektorfläche des Wärmetauschers zur Oberfläche des Bauelementes ausgebildet wird.

Auf der Innenseite des Bauelementes ist eine Dämmung vorgesehen, so dass an den Innenwänden keine bzw. nur sehr geringe Temperaturgradienten zum Innenraum entstehen.

Weiter ist es möglich, den Wärmetauscher auch in Energieabgaberichtung zu nutzen, um so Energie aus dem Gebäude oder einem Objekt an die äußere Wand abzuführen. Beispielsweise können Klimaanlagen ihre produzierte Energie (reversierte Wärmepumpe) an die Umgebung indirekt abgeben, ohne das beispielsweise ein Dach eines Hauses mit entsprechender Klimatechnik überseht sein muss. Insbesondere stellen Außenwände von Gebäuden oder Objekten eine sehr große Wärmetauscheroberfläche zur Verfügung.

Durch Kombination von zwei unterschiedlich angesteuerten Wärmetauschern (Erwärmung und Kühlung) in der inneren Wand kann diese als Pufferspeicher verwendet werden, um so Energie vielfältig zu nutzen. Hierbei stellt sich insbesondere die Ausgestaltung der inneren Wand in Betonausführung als äußerst effizient heraus, da Beton ein sehr guter Energiespeicher ist und gleichzeitig die statischen Aufgaben übernimmt.

Weiter umfasst eine Energiegewinnungsanordnung ein oder mehrere erfindungsgemäße Bauelemente und bildet so zusammen mit einer Wärmepumpe eine Wärmerückgewinnungsanlage. Hierbei wird der Wärmetauscher des Bauelementes an den Solekreis der Wärmepumpe angeschlossen und dient der Wärmepumpenanordnung als Energiereservoir. Zu beachten ist hierbei, dass bei zu geringen Temperaturen Wasser bzw. Feuchtigkeit aus der Umgebungsluft an dem Bauelement kondensiert, wodurch dieses Schaden nehmen könnte. Hierzu kann eine entsprechende Steuerung vorgesehen werden, die das Kondensieren von Luftfeuchtigkeit durch Regulierung der Vor- und Rücklauftemperatur verhindert. Alternativ kann das Bauelement durch entsprechende Dämmmaßnahmen größtenteils vor Kondensation geschützt werden.

Dadurch, dass mehrere Bauelemente in Reihe oder besonders bevorzugt parallel zueinander geschaltet sind, erhöht sich so die Effizienz der Wärmerückgewinnungsanlage bzw. es verringert sich das Risiko der Kondensation von Luftfeuchtigkeit auf dem Bauelement, da durch die größere Kollektorfläche mehr Energie für die Wärmepumpe zur Verfügung steht.

Tests und umfangreiche wissenschaftliche Simulationen mit Ausführungsformen der vorliegenden Erfindung haben gezeigt, dass die angestrebten Erfolge in erheblichem Maße eintreten. Wenn darüber hinaus Daten über das an einem Bauplatz zu erwartende Klimat genutzt werden, können die dadurch zur Verfügung stehenden Daten über die zu erwartende Wärmeeinwirkung an der äußeren Wand oder auch über die Regenhäufigkeit und damit mögliche Abkühlung dazu genutzt werden, die Ausführungsformen auszuwählen, die für einen bestimmten Bauplatz besonders geeignet sind.

Das Herstellungsverfahren zur Herstellung eines Bauelementes umfasst die Schritte:
- Vorbereiten einer Formschale zur Aufnahme der äußeren Wand;
- Vorbereiten der äußeren Wand durch Auflegen der wesentlichen Elemente der äußeren Wand;
- Versiegeln von etwaigen Fugen in der äußeren Wand;
- Ein- und Aufbringen des Wärmetauschers auf die Innenseite der äußeren Wand;
- Einbringen einer etwaig vorgesehenen statischen Verstärkung, Bewährung in die innere Wand;
- ggf. Ausrichten und Befestigen des Wärmetauschers an der statischen Verstärkung, Bewährung und/oder an der äußeren Wand;
- Herstellen der inneren Wand durch Einbringen des Wandmaterials;
- Aushärten des Bauelementes und etwaiger Baustoffe;
- Ausschalen des hergestellten Bauelementes und Entsiegeln von Fugen und ggf. anschließendes Verfugen von Fugen.

Beim Versiegeln von Fugen können diese mit entsprechenden Platzhaltern gefüllt werden. Hierzu bietet sich ein Kunststoff oder Schaumstoff an, der verhindert, dass beim Gießen der inneren Wand, durch Einbringen von Beton oder dgl., Beton in die später zu verfugenden Fugen eindringt. So bleiben die Fugen offen und können anschließend nach dem Entfernen der Versiegelung, also bspw. dem Schaumstoff, sauber verfugt werden.

Weitere vorteilhafte Ausgestaltungen können den Figuren entnommen werden. Nachfolgend werden Ausführungsbeispiele der Erfindung anhand der beiliegenden Zeichnungen detailliert beschrieben.

Darin zeigen:
- **Fig. 1**: eine schematische Darstellung des erfindungsgemäßen Bauelementes 1 in einer Draufsicht ohne die äußere Wand 3 [Schnitt] durch die vordere Grenzschicht;
- **Fig. 2**: eine schematische Darstellung des erfindungsgemäßen Bauelementes 1 in einer Draufsicht;
- **Fig. 3**: eine schematische Darstellung des erfindungsgemäßen Bauelementes 1 in einer Seitenansicht und
- **Fig. 4**: eine schematische Darstellung des erfindungsgemäßen Bauelementes 1 in einem Querschnitt durch das Bauelement 1.

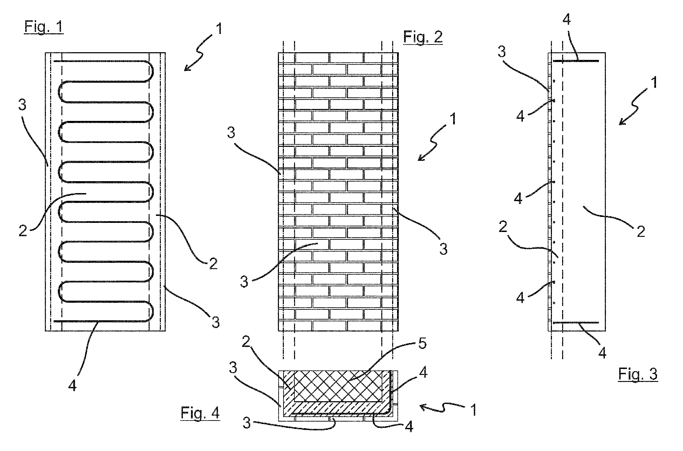

In **Fig. 1** ist eine schematische Darstellung des erfindungsgemäßen Bauelementes 1 in einer Draufsicht ohne die äußere Wand 3 dargestellt. Hierbei handelt es sich um einen Schnitt durch die vordere Grenzschicht in Höhe eines Wärmetauschers 4.

Das Bauelement 1 besteht aus einer inneren Wand 2 und einer äußeren Wand 3. In der Inneren Wand 2 ist ein Wärmetauscher 4 angeordnet. Die Anordnung des Wärmetauschers 4 erfolgt in der Grenzschicht, dem Übergangsbereich zwischen der inneren Wand 2 und der äußeren Wand 3, so dass der Wärmetauscher 4 bevorzugt an der äußeren Wand 3 anliegt, jedoch ausschließlich in der inneren Wand 2 angeordnet ist. Gleichwohl ist die Anordnung des Wärmetauschers 4 weiter im Inneren der inneren Wand 2 ebenfalls möglich.

Das Bauelement 1 weist in diesem Ausführungsbeispiel einen U-förmigen Grundriss (vgl. Fig. 4) auf, ist jedoch nicht auf diesen Grundriss zu beschränken. Der Wärmetauscher 4 ist in diesem Ausführungsbeispiel als Rohr ausgebildet. Dieses Rohr kann beispielsweise ein Kunststoffrohr sein, das sich leicht durch händisches Biegen verarbeiten lässt. Der Wärmetauscher 4 ist schlangenförmig in dem Bauteil 1 integriert, wobei ein Ende unten und ein weiteres Ende oben aus einem Seitenteil des Bauelementes 1 herausgeführt werden.

Im Weiteren werden für gleiche Elemente die gleichen Bezugszeichen wie in Fig. 1 verwendet. Zu deren prinzipieller Funktion wird auf Fig. 1 verwiesen.

In Fig. 2 ist eine schematische Darstellung des erfindungsgemäßen Bauelementes 1 in einer Draufsicht dargestellt.

Hierbei ist deutlich die Oberfläche der äußeren Wand 3 zu erkennen. Es handelt sich in diesem Ausführungsbeispiel um eine äußere Wand 3, die aus Riemchenklinkern besteht. Diese Riemchenklinker sind im Verband angeordnet und stellen die sichtbare äußere Oberfläche des Bauelementes 1 dar. Entsprechend der Vielfalt an Formen und Farben von erhältlichen Klinkern bzw. Riemchenklinkern kann so eine starke Prägung der äußeren Wand 3 nach architektonischen und ästhetischen Gesichtspunkten erfolgen.

Die in diesem Ausführungsbeispiel verwendeten Riemchenklinker sind handelsübliche Riemchenklinker mit den üblichen Massen.

Die Fig. 3 zeigt eine schematische Darstellung des erfindungsgemäßen Bauelementes 1 in einer Seitenansicht.

In dieser Darstellung sind die horizontal verlaufenden Abschnitte des Wärmetauschers 4 verdeutlicht, die direkt hinter der äußeren Wand 3 in der inneren Wand 2 eingebettet sind. Das obere und das untere Ende des Wärmetauschers 4 werden bis auf die Rückseite der inneren Wand geführt und dort beispielsweise mit einer Wärmepumpe verbunden, so dass sich ein Kreislauf ausbildet.

Es können auch mehrere einzelne Wärmetauscher 4 in ein einzelnes Bauelement 1 integriert werden. Diese können dann beispielsweise parallel zueinander geschaltet werden, um so die Effizienz weiter zu steigern.

Es können aber auch mehrere einzelne Bauelemente 1 miteinander in Reihe oder bevorzugt parallel geschaltet werden, um so eine größere Kollektorfläche mit einer höheren Effizienz zu erstellen.

Bevorzugt sind die Bauelemente 1 auf der Südseite (auf der Nordhalbkugel) eines Objektes aufzustellen, so dass die maximale Sonneneinstrahlung auf das oder die Bauelemente 1 auftrifft. Gleichwohl können aber auch alle Seiten eines Gebäudes oder Objektes mit den erfindungsgemäßen Bauelementen 1 ausgebildet werden, wobei hierbei die Energie aus der Umgebungstemperatur genommen werden kann.

Es sollte jedoch verhindert werden, dass zuviel Energie den Bauelementen 1 entzogen wird, so dass sich im schlimmsten Fall Kondensat an den Oberflächen bilden würde. Die Bildung von Kondensat an den Oberflächen kann durch intelligente Steuerung, beispielsweise über sensor- und computergesteuerte Ventile erfolgen, so dass zu sehr abgekühlte Abschnitte aus einer parallelen Schaltung ausgeschlossen werden und sich so wieder regenerieren können. Ebenfalls ist eine zeitgesteuerte Vorrangschaltung möglich und besonders sinnvoll.

In Fig. 4 ist eine schematische Darstellung des erfindungsgemäßen Bauelementes 1 in einem Querschnitt durch das Bauelement 1 dargestellt.

Insbesondere ist hier die Ausgestaltung der äußeren Wand 3 mittels der Riemchenklinker deutlich zu erkennen. Die Ecken der äußeren Wand sind mit entsprechend vorbereiteten Riemchenklinkern ausgebildet, so dass sich insgesamt eine geschlossene Oberfläche ausbildet; die jeweiligen Fugen sind hierbei verfugt, Die geschlossene Oberfläche der äußeren Wand 3 leitet zum einen die Umgebungstemperatur sehr gut an die innere Wand 2 und den direkt in der Grenzschicht angeordneten Wärmetauscher 4 weiter und zum anderen leitet sie den durch Sonneneinstrahlung hervorgerufenen Wärmeeintrag sehr effizient an den Wärmetauscher 4 weiter.

Bei allen technischen Vorteilen einer derart ausgestalteten Wand bleibt insbesondere die architektonische und ästhetische Komponente einer Klinkerwand erhalten.

Als weiteres Ausgestaltungsmerkmal ist auf der Innenseite der inneren Wand 2 eine Dämmung 5 angeordnet, die effektiv verhindert, dass sich Schwitzwasser an der Innenseite der inneren Wand 2 bildet. Die Dämmung kann auf der Innenseite mit einem entsprechenden Innenausbau vervollständigt werden, so dass auch auf der Innenseite des Bauelementes 1 keine technischen Details erkennbar sind. So können hocheffiziente Gebäude hergestellt werden, die auch sehr hohen architektonischen und ästhetischen Ansprüchen genügen.

Das dargestellte Ausführungsbeispiel ist nicht abschließend zu sehen, sondern stellt lediglich ein Ausführungsbeispiel des erfindungsgemäßen Bauelementes dar. Form, Größe, Länge und Dicke sind an die Gegebenheiten anzupassen. Es können alle erdenklichen Grundformen, Grundrisse und räumliche Formen ausgebildet werden.

### Bezugszeichenliste

- 1: Bauelement
- 2: innere Wand
- 3: äußere Wand
- 4: Wärmetauscher
- 5: Dämmung

## Patentansprüche

1. Bauelement (1) in Zweischalentechnik, aufweisend eine innere Wand (2) als tragende Struktur, eine äußere Wand (3) als Vorsatzschale mit einer dekorativen und/oder schützenden Funktion, mit einem Wärmetauscher (4) zur Übertragung von Wärme von dem Bauelement (1) an ein Wärmeträgermedium oder von dem Wärmeträgermedium an das Bauelement (1), wobei der Wärmetauscher (4) in der Grenzschicht zwischen der inneren (2) und der äußeren Wand (3), in der inneren Wand (2) angeordnet ist.

2. Bauelement nach Anspruch 1,
**dadurch gekennzeichnet,**
**dass** die innere Wand (2) Beton aufweist bzw. aus Beton besteht und die äußere Wand (3) ein Verblendmauerwerk ist, bevorzugt aus Klinkern, besonders bevorzugt aus Riemchenklinkern, wobei die Fugen bevorzugt mit Mörtel gefüllt sind.

3. Bauelement nach Anspruch 1 oder 2,
**dadurch gekennzeichnet,**
**dass** die äußere Wand (3) aus einem Putz und/oder einer Fassadenbekleidung besteht.

4. Bauelement nach Anspruch 1, 2 oder 3,
**dadurch gekennzeichnet,**
**dass** die innere und äußere Wand vollflächig miteinander verbunden sind.

5. Bauelement nach Anspruch 1, 2, 3 oder 4,
**dadurch gekennzeichnet,**
**dass** der Wärmetauscher (4) als biegbares Rohr ausgebildet ist, bevorzugt bestehend aus einem Kunststoff oder einem Mehrschichtverbundmaterial.

6. Bauelement nach einem der vorangehenden Ansprüche,
**dadurch gekennzeichnet,**
**dass** das Wärmeträgermedium eine Sole-Flüssigkeit ist, wobei diese frostsicher ist.

7. Bauelement nach einem der vorangehenden Ansprüche,
**dadurch gekennzeichnet,**
**dass** der Wärmetauscher (4) mäanderförmig, schlangenförmig und/oder schneckenförmig angeordnet ist.

8. Energiegewinnungsanordnung umfassend ein oder mehrere Bauelemente (1) nach einem der vorangehenden Ansprüche umfassend eine Wärmerückgewinnungsanlage, bevorzugt eine Wärmepumpe, wobei der Wärmetauscher (4) des Bauelementes (1) an den Solekreisein- bzw. -ausgang der Wärmepumpe angeschlossen ist.

9. Energiegewinnungsanordnung nach Anspruch 8,
**dadurch gekennzeichnet,**
**dass** mehrere Bauelemente (1) in Reihe oder besonders bevorzugt parallel zueinander geschaltet sind.

10. Herstellungsverfahren zur Herstellung eines Bauelementes nach einem der vorangehenden Ansprüche 1 bis 7, mit den Schritten:
a) Vorbereiten einer Formschale zur Aufnahme der äußeren Wand (3);
b) Vorbereiten der äußeren Wand durch Auflegen der wesentlichen Elemente der äußeren Wand (3);
c) Versiegeln von etwaigen Fugen in der äußeren Wand (3);
d) Ein- und Aufbringen des Wärmetauschers (4) auf die Innenseite der äußeren Wand (3);
e) Einbringen einer etwaig vorgesehenen statischen Verstärkung, Bewährung in die innere Wand (2);
f) ggf. Ausrichten und Befestigen des Wärmetauschers (4) an der statischen Verstärkung, Bewährung und/oder an der äußeren Wand (3);
g) Herstellen der inneren Wand (2) durch Einbringen des Wandmaterials;
h) Aushärten des Bauelementes und etwaiger Baustoffe;
i) Ausschalen des hergestellten Bauelementes und
j) Entsiegeln von Fugen und ggf. anschließendes Verfugen von Fugen.
